# EUROPEAN PATENT SPECIFICATION

(11) **EP 2 437 099 B1**
(45) Date of publication and mention of the grant of the patent: **01.07.2015**
(21) Application number: 11183492.5
(22) Date of filing: 30.09.2011
(51) Int. Cl.: G02C 11/00, G02C 9/04, G02B 27/01

(54) **Device-mounting support member for spectacles**
Trägerelement für Brillen zum Befestigen einer Vorrichtung
Élément de support pour lunettes pour monter un dispositif

(30) Priority: 01.10.2010 JP 2010224171; 01.10.2010 JP 2010224176; 01.10.2010 JP 2010224207
(43) Date of publication of application: 04.04.2012
(73) Proprietor: Olympus Corporation, Shibuya-ku Tokyo 151-0072 (JP)
(72) Inventor: Sugihara, Ryohei, Tokyo 151-0072 (JP); Tatsuta, Seiji, Tokyo 151-0072 (JP); Iba, Yoichi, Tokyo 151-0072 (JP)
(74) Representative: Winter, Brandl, Fürniss, Hübner, Röss, Kaiser, Polte - Partnerschaft mbB

(56) References cited:
- EP-A2- 2 237 099
- US-A- 3 769 663
- US-A1- 2007 008 484

## Description

The present application claims priority from Japanese Applications No. 2010-224207, No. 2010-224171 and No. 2010-224176, filed on October 1, 2010.

### TECHNICAL FIELD

The present invention relates to a device-mounting support member, and more particularly to a support member for mounting a wearable device to an eyeglass frame.

### RELATED ART

In recent years, an image display device or a small camera that is mountable on an eyeglass frame has been proposed as a wearable device. As a method of mounting such a wearable device on an eyeglass frame, the following methods are known. That is, for example, as disclosed in US 4753514 A, there is known a method in which a device is provided with a clip so as to clamp an eyeglass frame by the clip, to thereby mount the device. There is known another method, as disclosed in JP 2001-522064 A, in which the device is screwed to an eyeglass frame, to thereby mount the device. Further, there is also disclosed a device-mounting support member, in which a device to be mounted is provided with a clip portion, so as to clamp the lens by the clip portion, to thereby hold the device (see, for example, JP 2008-244658 A).

### DISCLOSURE OF THE INVENTION

### PROBLEMS TO BE SOLVED BY THE INVENTION

However, in the method of mounting the device on an eyeglass frame or a lens with the use of a clip, as disclosed in US 4753514 A and in JP 2008-244658 A, the clip is required to have a spring force strong enough to fix the device to the eyeglass frame. However, a clip having such a strong spring force is difficult to manipulate. Further, even if the device was managed to be attached to the eyeglass frame with the aid of a clip having a strong spring force, the stability is still not sufficient enough, which leads to a fear that the device be easily displaced from the attached state or the device fall off, due to unexpected contact or the like during use.

Meanwhile, in the method of using a screw to mount the device on an eyeglass frame as disclosed in JP 2001-522064 A, it is troublesome to attach and remove the screw.

Further, in any of the methods described in US 4753514 A and in JP 2001-522064 A, there is a fear that, depending on the shape of a temple portion (temple) of an eyeglass frame on which the device is to be mounted, the device is unintentionally rotated about an axis along an extending direction of the temple portion of the eyeglass frame.

EP 2 237 099 A2 discloses a device-mounting support member for mounting a wearable device onto an eyeglass frame, said support member comprising an eyeglass frame attachment member, a support frame member, and a head abutment member, wherein the support frame portion is arranged on the outside of the temple of the eyeglass frame, the head abutment portion is arranged on the headside of the temple of the eyeglass frame and prevents rotation about the temple, and the support frame portion and the head abutment portion are coupled to each other via a support bridge portion, in the terminology of the present invention.

Further documents that may be helpful in understanding the present invention are US 3 769 663 A and US 2007/008484 A1.

The present invention has been made in view of the above-mentioned problems, and therefore, it is an object of the present invention to provide a device-mounting support member capable of stably mounting a wearable device on one side of eyeglasses with ease, without the need to make any specific arrangement to the eyeglass frame.

### MEANS FOR SOLVING THE PROBLEM

In order to solve the above-mentioned problems, the present invention is generally configured as follows.
(1) A device-mounting support member for mounting a wearable device onto an eyeglass frame according to any of claims 1 or 2.
(2) The device-mounting support member according to the above-mentioned item (1), wherein the head abutment portion has a leading end portion curved to the inside of the temple of the eyeglass frame, the leading end portion being being subjected to one of branching and bending in a plurality of directions along the head of the wearer.
(3) The device-mounting support member according to the above-mentioned item (1), wherein the support frame portion has coupling means for attaching the wearable device so that the wearable device is made adjustable in posture thereof.
(4) The device-mounting support member according to the above-mentioned item (1), wherein the head abutment portion is an ear hook portion to be hooked onto an ear of the wearer.

### EFFECT OF THE INVENTION

The present invention can provide a device-mounting support member, capable of stably mounting a wearable device on one side of eyeglasses with ease, without the need to make any specific arrangement to the eyeglass frame.

### BRIEF DESCRIPTION OF THE DRAWINGS

Figs. 1A and 1B are views schematically illustrating a device-mounting support member according to a first embodiment of the present invention;
Figs. 2A and 2B are views for illustrating coupling means and the action thereof, of the device-mounting support member according to the first embodiment of the present invention;
Figs. 3A to 3C are views illustrating an example of a method of attaching, to an eyeglass frame, the device-mounting support member according to the first embodiment of the present invention;
Figs. 4A to 4D are views illustrating an example of another method of attaching, to an eyeglass frame, the device-mounting support member according to the first embodiment of the present invention;
Figs. 5A to 5C are views illustrating a modified example of a support bridge portion of the device-mounting support member according to the first embodiment of the present invention and an attachment method thereof;
Figs. 6A to 6C are views illustrating an eyeglass frame attachment portion of a device-mounting support member according to a second embodiment of the present invention;
Figs. 7A to 7C are views illustrating modified examples of the eyeglass frame attachment portion of the device-mounting support member according to the second embodiment of the present invention.

### BEST MODES FOR CARRYING OUT THE INVENTION

In the following, embodiments of a device-mounting support member according to the present invention are described with reference to the accompanying drawings. In the following description, unless otherwise specified, directions such as front, back, above, below, vertical, and horizontal, are defined in a state where eyeglasses having the device-mounting support member attached to a temple portion (eyeglass temple) of an eyeglass frame is mounted on the head of a user. Further, in a state where the eyeglasses are thus mounted, the head side of the eyeglass temple is referred to as inside while the other side thereof is referred to as outside.

### < First Embodiment>

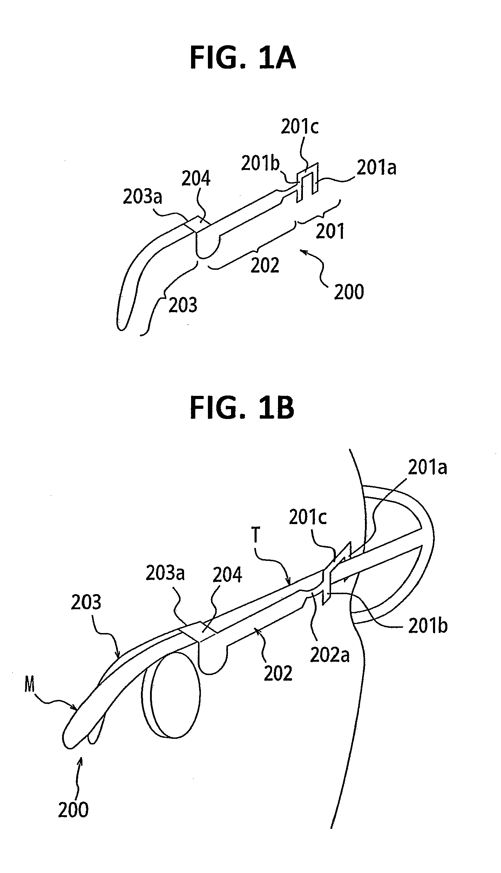

Fig. 1A is a perspective view schematically illustrating a device-mounting support member 200 according to a first embodiment, and Fig. 1B is a schematic view illustrating the device-mounting support member 200 of Fig. 1A, which is attached to an eyeglass frame and worn by a wearer.

In Figs. 1A and 1B, the device-mounting support member 200 includes: an eyeglass frame attachment portion 201 having a first pressing portion 201 a to be pressed against the temple portion T of an eyeglass frame; a support frame portion 202 to be attached with the wearable device W, the support frame portion 202 extending substantially parallel to the temple portion T of the eyeglass frame from the eyeglass frame attachment portion 201; and a head abutment portion 203 coupled to the support frame portion 202 so as to be abutted to the head of the wearer. With the aid of the eyeglass frame attachment portion 201 and the head abutment portion 203, the device-mounting support member 200 can be attached with ease. At the same time, the device-mounting support member 200 is fixed at two points, namely, at the eyeglasses and at the wearer, so as to be stably fixed. In particular, the eyeglass frame attachment portion 201 defines the attachment position with respect to the wearer, while the head abutment portion 203 prevents the device from falling off and rotating with respect to the temple of the eyeglasses.

As illustrated in Fig. 1B, the support frame portion 202 is arranged on the outside of the temple portion T of the eyeglass frame, while the head abutment portion 203 is arranged on the inside of the temple portion T of the eyeglass frame and curved in the direction along the head shape, that is, curved to the inside of the temple portion T of the eyeglass frame. The support frame portion 202 and the head abutment portion 203 are coupled to each other via a support bridge portion 204 that straddles above the temple portion T of the eyeglass frame. The support frame portion 202 is arranged on the outside of the eyeglass frame, which allows the wearable device to be attached with ease.

In Figs. 1A and 1B, the first pressing portion 201a of the eyeglass frame attachment portion 201 is arranged on the inside of the temple portion T of the eyeglass frame, and the head abutment portion 203 has a second pressing portion 203a to be pressed against the inside of the temple portion T of the eyeglass frame.

In Figs. 1A and 1B, the eyeglass frame attachment portion 201 further includes: an outside attachment portion 201 b which is coupled to the support frame portion 202 and arranged on the outside of the temple portion T of the eyeglass frame; and an attachment bridge portion 201 c directly coupling the first pressing portion 201 a and the outside attachment portion 201 b to each other across the upper side of the temple portion T of the eyeglass frame. The eyeglass frame attachment portion 201 is configured to be pressed and clamped from the inside and the outside of the eyeglass frame, so as to be stably fixed.

With this configuration, the outside attachment portion 201 b serves as a pivot point with respect to the temple portion T when the support member 200 is attached to the eyeglass frame, and the support frame portion 202 exerts an elastic force to cause the first pressing portion 201 a to be pressed against the temple portion from the inside to the outside of the temple portion T of the eyeglass frame and the second pressing portion 203a to be pressed against the temple portion from the inside to the outside of the temple portion T of the eyeglass frame. As a result, the device can be attached with ease while the device is stably fixed when worn.

At this time, the support frame portion 202 coupling to the outside attachment portion 201 b of the eyeglass frame attachment portion 201 may have a part 202a that is smaller in spring constant as compared to the rest of the support frame portion 202, so as to be easily adapted to both of a wide temple and a narrow temple due to the difference in amount of deflection of the spring.

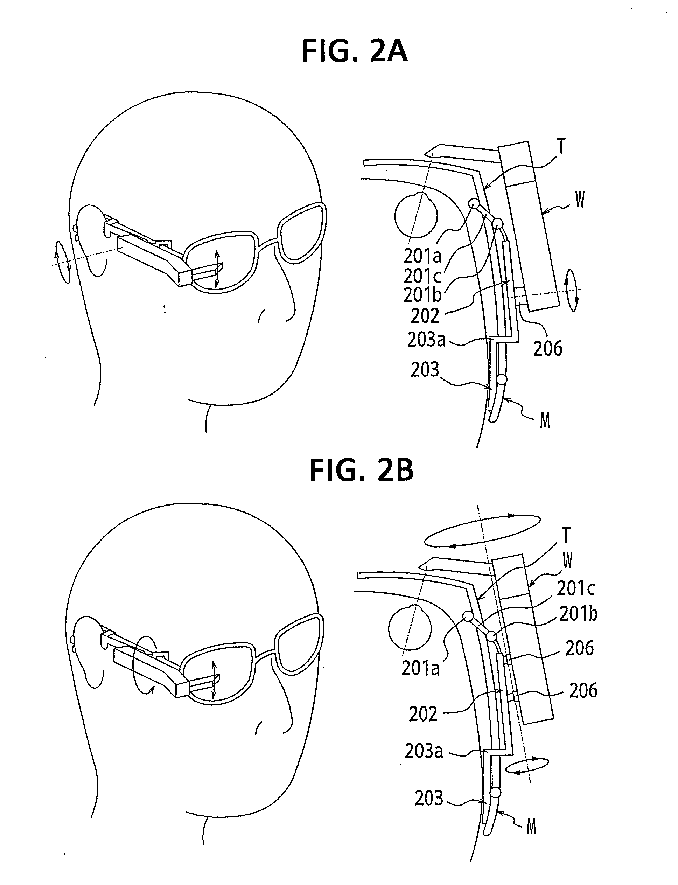

Figs. 2A and 2B each are an external perspective view and a partial plan view, respectively, illustrating the support member 200 attached with the wearable device W, which is attached to an eyeglass frame and mounted on the head of the wearer. In Figs. 2A and 2B the support frame portion 202 has coupling means 206 for attaching the wearable device W so as to be adjustable in attachment posture. For example, when mounting, as the wearable device, a head-mounted image display device that requires adjustment with respect to an eyeball of the wearer, the coupling means 206 thus employed allows the exit pupil of the head-mounted image display device to be adjusted to the visual axis of the wearer, in accordance with eyeglass frames in various shapes.

Further, as illustrated respectively in Figs. 2A and 2B the coupling means 206 described above has a mechanism capable of rotating the wearable device W in at least one of a pitch direction (Fig. 2A) and a roll direction (Fig. 2B) with respect to the extending direction of the temple portion T of the eyeglass frame. The dimensional variations among eyeglass frames in different shapes result in a misalignment between the exit pupil of the head-mounted image display device and the visual axis of an eyeball, and the misalignment significantly varies particularly in the vertical direction. Such a misalignment in the vertical direction can be adjusted by the rotating mechanism, which is easier to be downsized as compared to a slide mechanism.

Figs. 2A and 2B illustrates the device-mounting support member 200 of the first embodiment.

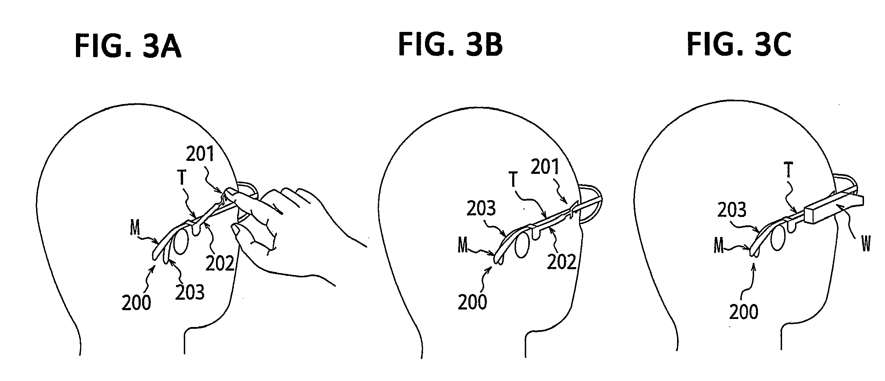

Figs. 3A to 3C are views illustrating an example of a method of attaching, to an eyeglass frame, the device-mounting support member 200 according to the first embodiment of the present invention. In Figs. 3A to 3C, first, the head abutment portion 203 is hung on the end cover portion M of the eyeglass frame (Fig. 3A), and then the eyeglass frame attachment portion 201 is hung on the temple portion T of the eyeglass frame (Fig. 3B). Lastly, the wearable device W is attached thereto (Fig. 3C). Alternatively, the device-mounting support member 200 may be attached with the wearable device W in advance, and then fixed to the eyeglass frame.

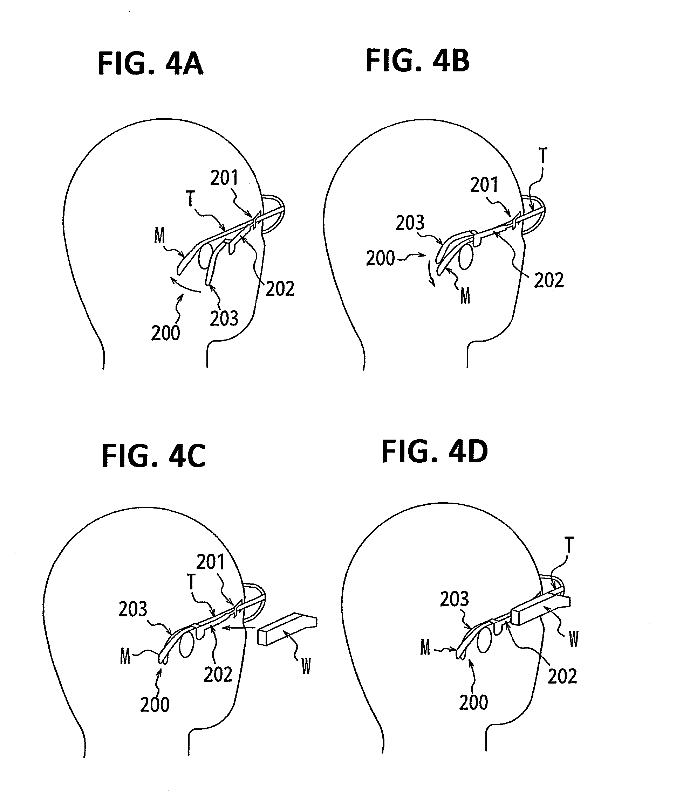

Figs. 4A to 4D are views illustrating an example of another method of attaching, to an eyeglass frame, the device-mounting support member 200 according to the first embodiment of the present invention described above. In Figs. 4A to 4D first, the eyeglass frame attachment portion 201 is hung on the temple portion T of the eyeglass frame (Fig. 4A), and then the head abutment portion 203 is hung on the end cover portion M of the eyeglass frame (Fig. 4B). Lastly, the wearable device W is attached thereto (Figs. 4C and 4D). Alternatively, the device-mounting support member 200 may be attached with the wearable device W in advance, and then fixed to the eyeglass frame.

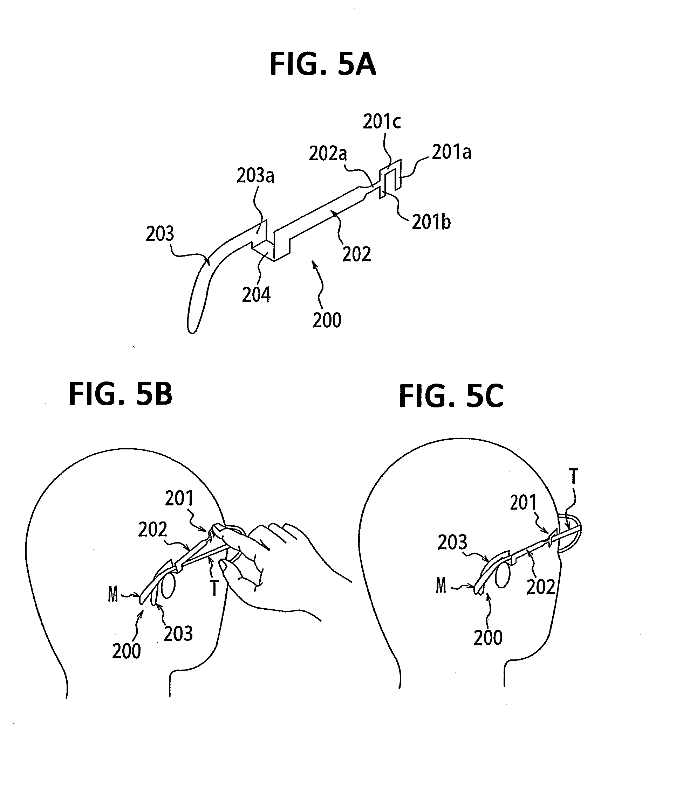

Figs. 5A to 5C are views illustrating a modified example of the support bridge portion 204 of the device-mounting support member 200 according to the first embodiment of the present invention described above and an attachment method thereof. The device-mounting support member 200 of Fig. 5A has the support bridge portion 204 that straddles below the temple portion T of the eyeglass frame. In this case, first, the head abutment portion 203 is hung on the ear of the wearer (Fig. 5B), and then the eyeglass frame attachment portion 201 is hung on the temple portion T of the eyeglass frame (Fig. 5C). Lastly, the wearable device W is attached thereto. Alternatively, the device-mounting support member 200 may be attached with the wearable device W in advance, and then fixed to the eyeglass frame.

### < Second Embodiment>

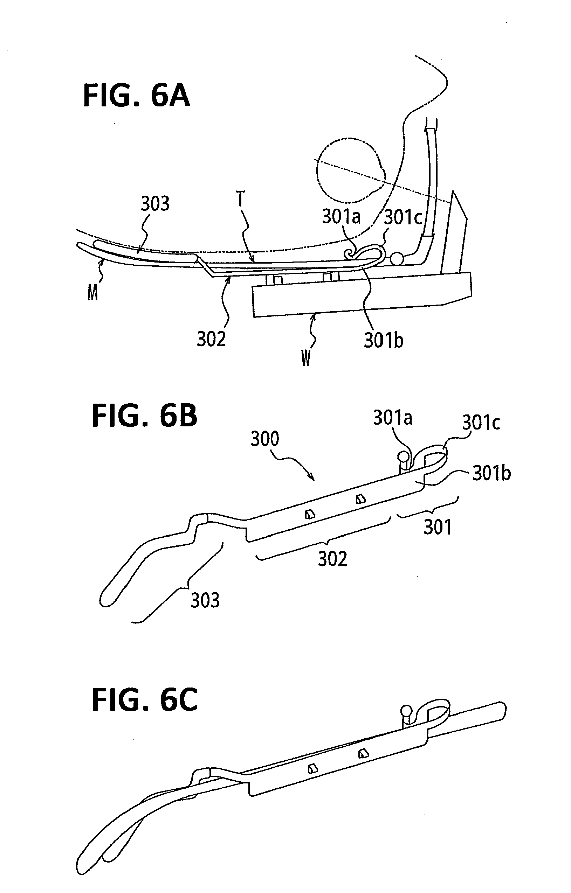

Figs. 6A to 6C are views illustrating a device-mounting support member 300 according to a second embodiment of the present invention, in which: Fig. 6A is a plan view illustrating the device-mounting support member 300 attached with the wearable device W, which is attached to an eyeglass frame and worn by a wearer; Fig. 6B is a perspective view illustrating the device-mounting support member 300; and Fig. 6C is a perspective view illustrating the device-mounting support member 300 of Fig. 6B attached to an eyeglass frame.

As illustrated in Figs. 6A to 6C, an eyeglass frame attachment portion 301 has an outside attachment portion 301 b which is coupled to a support frame portion 302 and arranged on the outside of the frame portion T of the eyeglass frame, and an attachment bridge portion 301 c directly coupling a first pressing portion 301 a and the outside attachment portion 301 b to each other across the upper side of the temple portion T of the eyeglass frame. The attachment bridge portion 301 c exerts an elastic force to cause the first pressing portion 301 a to be pressed against the temple portion T from the inside to the outside of the temple portion T of the eyeglass frame. The head abutment portion 303 prevents the device from falling off and rotating with respect to the temple of the eyeglasses.

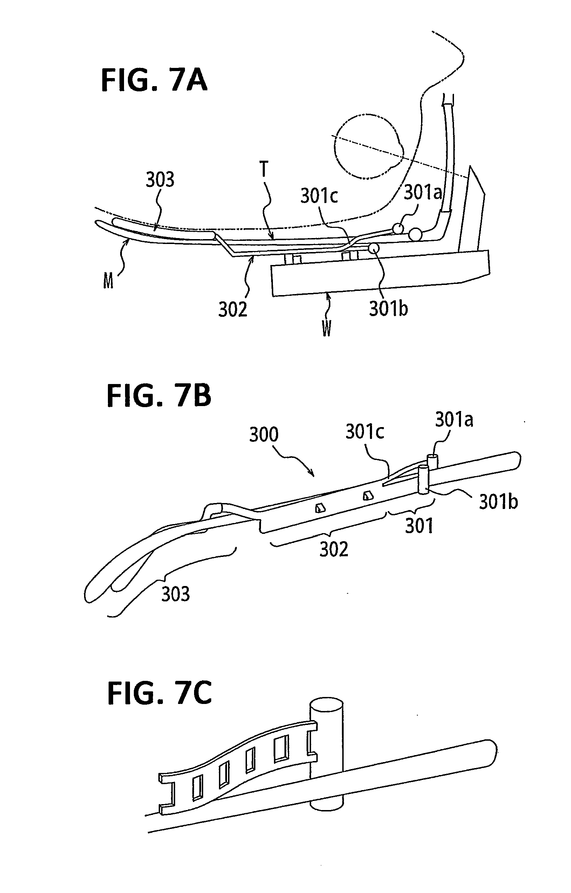

Further, Figs. 7A to 7C are views illustrating modified examples of the eyeglass frame attachment portion 301 of the device-mounting support member 300 according to the second embodiment of the present invention, in which: Fig. 7A is a plan view illustrating the device-mounting support member 300 attached with the wearable device W, which is attached to an eyeglass frame and worn by a wearer; and Fig. 7B is a perspective view illustrating the device-mounting support member 300 attached to an eyeglass frame.

The eyeglass frame attachment portion 301 in Figs. 7A to 7C is different from the one illustrated Figs. 6A to 6C in that the attachment bridge portion 301c couples the first pressing portion 301a and the support frame portion 302. In other words, the attachment bridge portion 301c extends, as diverging from the support frame portion 302. The outside attachment portion 301 b is coupled to the support frame portion 302, and hence the first pressing portion 301 a is pressed against the temple portion from the inside to the outside of the temple portion T of the eyeglass frame due to an elastic force exerted by the attachment bridge portion 301c. Further, as illustrated in Fig. 7C, the attachment bridge portion 301 c may be formed of a wide spring with openings, which produces effects of preventing a twist thereof and also allowing adjustment of the spring constant.

### DESCRIPTION OF SYMBOLS

- 200: device-mounting support member
- 201: eyeglass frame attachment portion
- 201a: first pressing portion
- 202: support frame portion
- 203: head abutment portion
- 203a: second abutment portion
- 204: support bridge portion
- 300: device-mounting support member
- 301: eyeglass attachment portion
- 301a: first pressing portion
- 301b: outside attachment portion
- 301c: attachment bridging portion
- 302: support frame portion

## Claims

1. A device-mounting support member (200) for mounting a wearable device (W) onto an eyeglass frame, comprising:
an eyeglass frame attachment portion (201) having a first pressing portion (201 a) adapted to be pressed against a temple (T) of the eyeglass frame;
a support frame portion (202) to be attached with the wearable device (W), the support frame portion (202) extending from the eyeglass frame attachment portion (201) substantially parallel to the temple (T) of the eyeglass frame; and
a head abutment portion (203) which is coupled to the support frame portion (202) and to be abutted to a head of a wearer, wherein:
the support frame portion (202) is arranged on the outside of the temple (T) of the eyeglass frame;
the head abutment portion (203) is arranged on the headside of the temple (T) of the eyeglass frame and curved to be adapted to extend along the head shape of the wearer when the support member is attached to the eyeglass frame, in order to prevent rotation about the temple (T);
the support frame portion (202) and the head abutment portion (203) are coupled to each other via a support bridge portion (204) that straddles the temple (T) of the eyeglass frame;
the first pressing portion (201 a) of the eyeglass frame attachment portion (201) is arranged on the head side of the temple (T) of the eyeglass frame;
the head abutment portion (203) has a second pressing portion (203a) to be pressed against the head side of the temple (T) of the eyeglass frame;
the eyeglass frame attachment portion (201) further has an outside attachment portion (201b) coupled to the support frame portion (202) and arranged on the outside of the temple (T) of the eyeglass frame, and an attachment bridge portion (201 c) for coupling, across the temple (T) of the eyeglass frame, the first pressing portion (201 a) to the outside attachment portion (201b); and
the support frame portion (202) exerts an elastic force, when the support member is attached to the eyeglass frame, so as to cause the first pressing portion (201 a) and the second pressing portion (203a) to be pressed against the temple (T) of the eyeglass frame from the head side toward the opposite side of the temple (T).

2. A device-mounting support member (300) for mounting a wearable device (W) onto an eyeglass frame, comprising:
an eyeglass frame attachment portion (301) having a first pressing portion (301 a) adapted to be pressed against a temple (T) of the eyeglass frame;
a support frame portion (302) to be attached with the wearable device (W), the support frame portion (302) extending from the eyeglass frame attachment portion (301) substantially parallel to the temple (T) of the eyeglass frame; and
a head abutment portion (303) which is coupled to the support frame portion (302) and to be abutted to a head of a wearer, wherein:
the support frame portion (302) is arranged on the outside of the temple (T) of the eyeglass frame;
the head abutment portion (303) is arranged on the headside of the temple (T) of the eyeglass frame and curved to be adapted to extend along the head shape of the wearer when the support member is attached to the eyeglass frame, in order to prevent rotation about the temple (T);
the support frame portion (302) and the head abutment portion (303) are coupled to each other via a support bridge portion that straddles the temple (T) of the eyeglass frame;
the first pressing portion (301 a) of the eyeglass frame attachment portion (301) is arranged on the head side of the temple (T) of the eyeglass frame;
the head abutment portion (303) has a second pressing portion to be pressed against the head side of the temple (T) of the eyeglass frame;
the eyeglass frame attachment portion (301) further has an outside attachment portion (301 b) coupled to the support frame portion (302) and arranged on the outside of the temple (T) of the eyeglass frame, and an attachment bridge portion (301 c) for coupling, across the temple (T) of the eyeglass frame, the first pressing portion (301 a) to one of the outside attachment portion (301 b) and the support frame portion (302); and
the attachment bridge portion (301 c) exerts an elastic force, when the support member is attached to the eyeglass frame, so as to cause the first pressing portion (301 a) to be pressed against the temple (T) of the eyeglass frame from the head side toward the opposite side of the temple (T).

3. The device-mounting support member (200, 300) according to any of claims 1 or 2, wherein the head abutment portion (203, 303) has a leading end portion curved to the inside of the temple of the eyeglass frame, the leading end portion being subjected to one of branching and bending in a plurality of directions along the head of the wearer.

4. The device-mounting support member (200, 300) according to any of claims 1 or 2, wherein the support frame portion (202, 302) has coupling means for attaching the wearable device (W) so that the wearable device (W) is made adjustable in posture thereof.

5. The device-mounting support member (200, 300) according to any of claims 1 or 2, wherein the head abutment portion (203, 303) is an ear hook portion to be hooked onto an ear of the wearer.

## Patentansprüche

1. Vorrichtungsbefestigungs-Stützabschnitt (200) zum Befestigen einer tragbaren Vorrichtung (W) an einem Brillengestell, mit:
einem Brillengestell-Befestigungsabschnitt (201) mit einem ersten, gegen einen Bügel (T) des Brillengestells zu drückenden Drückabschnitt (201a);
einem mit der tragbaren Vorrichtung (W) zu befestigenden Stützrahmenabschnitt (202), wobei sich der Stützrahmenabschnitt (202) von dem Brillengestell-Befestigungsabschnitt (201) im Wesentlichen parallel zu dem Bügel (T) des Brillengestells erstreckt; und
einem an dem Kopf eines Träger anzuliegenden Kopfanlageabschnitt (203), der mit dem Stützrahmenabschnitt (202) verbunden ist, wobei:
der Stützrahmenabschnitt (202) an der Außenseite des Bügels (T) des Brillengestells angeordnet ist;
der Kopfanlageabschnitt (203) auf der Kopfseite des Bügels (T) des Brillengestells angeordnet und gekrümmt ist, um dazu geeignet zu sein, sich entlang der Kopfform des Trägers zu erstrecken, wenn das Stützelement an dem Bügel (T) befestigt ist, um eine Drehung um den Bügel (T) zu verhindern;
der Stützrahmenabschnitt (202) und der Kopfanlageabschnitt (203) über einen Stützbrückenabschnitt (204) miteinander verbunden sind, der den Bügel (T des Brillengestells übergreift;
der erste Drückabschnitt (201 a) des Brillengestell-Befestigungsabschnitts (201) auf der Kopfseite des Bügels (T) des Brillengestells angeordnet ist;
der Kopfanlageabschnitt (203) einen zweiten, gegen die Kopfseite des Bügels (T) des Brillengestells zu drückenden Drückabschnitt (203a) umfasst;
der Brillengestell-Befestigungsabschnitt (201) ferner einen Außenbefestigungsabschnitt (201 b), der mit dem Stützrahmenabschnitt (202) verbunden und auf der Außenseite des Bügels (T) des Brillengestells angeordnet ist, und einen Befestigungsbrückenabschnitt (201 c) zum Verbinden, über den Bügel (T) des Brillengestells, des ersten Drückabschnitts (201 a) mit dem Außenbefestigungsabschnitt (201 b) umfasst; und
der Stützrahmenabschnitt (202) eine elastische Kraft ausübt, wenn das Stützelement an dem Brillengestell befestigt ist, um so zu bewirken, dass der erste Drückabschnitt (201 a) und der zweite Drückabschnitt (203a) von der Kopfseite zur entgegengesetzten Seite des Bügels (T) gegen den Bügel (T) des Brillengestells gedrückt werden.

2. Vorrichtungsbefestigungs-Stützabschnitt (300) zum Befestigen einer tragbaren Vorrichtung an einem Brillengestell, mit:
einem Brillengestell-Befestigungsabschnitt (301) mit einem ersten, gegen einen Bügel (T) des Brillengestells zu drückenden Drückabschnitt (301 a);
einem mit der tragbaren Vorrichtung (W) zu befestigenden Stützrahmenabschnitt (302), wobei sich der Stützrahmenabschnitt (302) von dem Brillengestell-Befestigungsabschnitt (301) im Wesentlichen parallel zu dem Bügel (T) des Brillengestells erstreckt; und
einem an dem Kopf eines Träger anzuliegenden Kopfanlageabschnitt (303), der mit dem Stützrahmenabschnitt (302) verbunden ist, wobei:
der Stützrahmenabschnitt (302) an der Außenseite des Bügels (T) des Brillengestells angeordnet ist;
der Kopfanlageabschnitt (303) auf der Kopfseite des Bügels (T) des Brillengestells angeordnet ist und gekrümmt ist, um dazu geeignet zu sein, sich entlang der Kopfform des Trägers zu erstrecken, wenn das Stützelement an dem Bügel (T) befestigt ist, um eine Drehung um den Bügel (T) zu verhindern;
der Stützrahmenabschnitt (302) und der Kopfanlageabschnitt (303) über einen Stützbrückenabschnitt miteinander verbunden sind, der den Bügel (T des Brillengestells übergreift;
der erste Drückabschnitt (301 a) des Brillengestell-Befestigungsabschnitts (301) auf der Kopfseite des Bügels (T) des Brillengestells angeordnet ist;
der Kopfanlageabschnitt (303) einen zweiten, gegen die Kopfseite des Bügels (T) des Brillengestells zu drückenden Drückabschnitt umfasst;
der Brillengestell-Befestigungsabschnitt (301) ferner einen Außenbefestigungsabschnitt (301 b), der mit dem Stützrahmenabschnitt (302) verbunden und auf der Außenseite des Bügels (T) des Brillengestells angeordnet ist, und einen Befestigungsbrückenabschnitt (301 c) zum Verbinden, über den Bügel (T) des Brillengestells, des ersten Drückabschnitts (301 a) mit entweder dem Außenbefestigungsabschnitt (301 b) oder dem Stützrahmenabschnitt (302) umfasst; und
der Befestigungsbrückenabschnitt (301 c) eine elastische Kraft ausübt, wenn das Stützelement an dem Brillengestell befestigt ist, um so zu bewirken, dass der erste Drückabschnitt (301 a) von der Kopfseite zur entgegengesetzten Seite des Bügels (T) gegen den Bügel (T) des Brillengestells gedrückt wird.

3. Vorrichtungsbefestigungs-Stützabschnitt (200, 300) nach einem der Ansprüche 1 o-der 2, wobei der Kopfanlageabschnitt (203, 303) einen Vorderendabschnitt umfasst, der zur Innenseite des Bügels des Brillengestells gekrümmt ist, wobei der Vorderendabschnitt einer Verzweigung oder Biegung in mehrere Richtungen entlang des Kopfes des Trägers ausgesetzt ist.

4. Vorrichtungsbefestigungs-Stützabschnitt (200, 300) nach einem der Ansprüche 1 o-der 2, wobei der Stützrahmenabschnitt (202, 302) ein Verbindungsmittel zum Befestigen der tragbaren Vorrichtung (W) umfasst, so dass die Lage der tragbaren Vorrichtung (W) einstellbar ist.

5. Vorrichtungsbefestigungs-Stützabschnitt (200, 300) nach einem der Ansprüche 1 o-der 2, wobei der Kopfanlageabschnitt (203, 303) ein Ohreinhängeabschnitt zum Einhängen an einem Ohr des Trägers ist.

## Revendications

1. Elément de support de montage de dispositif (200) pour monter un dispositif portable (W) sur une monture de lunettes, comprenant :
une partie à fixation de monture de lunettes (201) comportant une première partie à pression (201a) adaptée pour être pressée contre une tempe (T) de la monture de lunettes ;
une partie à monture de support (202) destinée à être fixée au dispositif portable (W), la partie à monture de support (202) s'étendant à partir de la partie à fixation de monture de lunettes (201) de façon sensiblement parallèle à la tempe (T) de la monture de lunettes ; et
une partie d'appui contre la tête (203) qui est accouplée à la partie à monture de support (202) et destinée à en appui contre une tête d'un porteur, dans lequel :
la partie à monture de support (202) est agencée sur l'extérieur de la tempe (T) de la monture de lunettes ;
la partie d'appui contre la tête (203) est agencée sur le côté tête de la tempe (T) de la monture de lunettes et incurvée pour être adaptée pour s'étendre le long de la forme de tête du porteur lorsque l'élément de support est fixé à la monture de lunettes, afin d'empêcher la rotation autour de la tempe (T) ;
la partie à monture de support (202) et la partie d'appui contre la tête (203) sont accouplées l'une à l'autre par l'intermédiaire d'une partie à pont de support (204) qui enfourche la tempe (T) de la monture de lunettes ;
la première partie à pression (201a) de la partie à fixation de monture de lunettes (201) est agencée sur le côté tête de la tempe (T) de la monture de lunettes ;
la partie d'appui contre la tête (203) comporte une seconde partie à pression (203a) destinée à être pressée contre le côté tête de la tempe (T) de la monture de lunettes ;
la partie à fixation de monture de lunettes (201) comporte en outre une partie à fixation extérieure (201b) accouplée à la partie à monture de support (202) et agencée sur l'extérieur de la tempe (T) de la monture de lunettes, et une partie à pont de fixation (201c) pour accoupler, en travers de la tempe (T) de la monture de lunettes, la première partie à pression (201a) à la partie à fixation extérieure (201b) ; et
la partie à monture de support (202) exerce une force élastique, lorsque l'élément de support est fixé à la monture de lunettes, afin de faire en sorte que la première partie à pression (201a) et la seconde partie à pression (203a) soient pressées contre la tempe (T) de la monture de lunettes à partir du côté tête vers le côté opposé de la tempe (T).

2. Elément de support de montage de dispositif (300) pour monter un dispositif portable (W) sur une monture de lunettes, comprenant :
une partie à fixation de monture de lunettes (301) comportant une première partie à pression (301a) adaptée pour être pressée contre une tempe (T) de la monture de lunettes ;
une partie à monture de support (302) destinée à être fixée au dispositif portable (W), la partie à monture de support (302) s'étendant à partir de la partie à fixation de monture de lunettes (301) de façon sensiblement parallèle à la tempe (T) de la monture de lunettes ; et
une partie d'appui contre la tête (303) qui est accouplée à la partie à monture de support (302) et destinée à en appui contre une tête d'un porteur, dans lequel :
la partie à monture de support (302) est agencée sur l'extérieur de la tempe (T) de la monture de lunettes ;
la partie d'appui contre la tête (303) est agencée sur le côté tête de la tempe (T) de la monture de lunettes et incurvée pour être adaptée pour s'étendre le long de la forme de tête du porteur lorsque l'élément de support est fixé à la monture de lunettes, afin d'empêcher la rotation autour de la tempe (T) ;
la partie à monture de support (302) et la partie d'appui contre la tête (303) sont accouplées l'une à l'autre par l'intermédiaire d'une partie à pont de support qui enfourche la tempe (T) de la monture de lunettes ;
la première partie à pression (301a) de la partie à fixation de monture de lunettes (301) est agencée sur le côté tête de la tempe (T) de la monture de lunettes ;
la partie d'appui contre la tête (303) comporte une seconde partie à pression destinée à être pressée contre le côté tête de la tempe (T) de la monture de lunettes ;
la partie à fixation de monture de lunettes (301) comporte en outre une partie à fixation extérieure (301b) accouplée à la partie à monture de support (302) et agencée sur l'extérieur de la tempe (T) de la monture de lunettes, et une partie à pont de fixation (301c) pour accoupler, en travers de la tempe (T) de la monture de lunettes, la première partie à pression (301a) à une de la partie à fixation extérieure (301b) et de la partie à monture de support (302) ; et
la partie à pont de fixation (301c) exerce une force élastique, lorsque l'élément de support est fixé à la monture de lunettes, afin de faire en sorte que la première partie à pression (301a) soit pressée contre la tempe (T) de la monture de lunettes à partir du côté tête vers le côté opposé de la tempe (T).

3. Elément de support de montage de dispositif (200, 300) selon une quelconque des revendications 1 ou 2, dans lequel la partie d'appui contre la tête (203, 303) comporte une partie terminale avant incurvée vers l'intérieur de la tempe de la monture de lunettes, la partie terminale avant étant soumise à une d'une bifurcation et d'une flexion dans une pluralité de directions le long de la tête du porteur.

4. Elément de support de montage de dispositif (200, 300) selon une quelconque des revendications 1 ou 2, dans lequel la partie à monture de support (202, 302) comporte des moyens d'accouplement pour fixer le dispositif portable (W) pour que la position du dispositif portable (W) soit réglable.

5. Elément de support de montage de dispositif (200, 300) selon une quelconque des revendications 1 ou 2, dans lequel la partie d'appui contre la tête (203, 303) est une partie à crochet pour oreille destinée à être accrochée sur une oreille du porteur.
